# EUROPÄISCHE PATENTSCHRIFT

(11) **EP 3 464 908 B1**
(45) Veröffentlichungstag und Bekanntmachung des Hinweises auf die Patenterteilung: **08.07.2020**
(21) Anmeldenummer: 17723007.5
(22) Anmeldetag: 10.05.2017
(51) Int. Cl.: F15B 1/02, F15B 1/033, F15B 13/02, F16H 61/4096, G05D 16/00, F15B 13/04

(54) **VENTILVORRICHTUNG**
VALVE DEVICE
SYSTÈME DE VANNES

(30) Priorität: 25.05.2016 DE 102016006545
(43) Veröffentlichungstag der Anmeldung: 10.04.2019
(73) Patentinhaber: HYDAC Systems & Services GmbH, 66280 Sulzbach (DE)
(72) Erfinder: HINSBERGER, Kenny, 66287 Quierschied (DE)
(74) Vertreter: Bartels, Martin Erich Arthur
(86) Internationale Anmeldenummer: PCT/EP2017/000569
(87) Internationale Veröffentlichungsnummer: WO 2017/202485

(56) Entgegenhaltungen:
- EP-B1- 0 602 036
- DE-A1- 3 604 410
- DE-A1-102012 005 594
- DE-T5-112013 006 960

## Beschreibung

Die Erfindung betrifft eine Ventilvorrichtung mit einer Druckreduzierfunktion mit den Merkmalen im Oberbegriff des Anspruchs 1.

Durch DE 10 2014 000 695 A1 ist eine Ventilvorrichtung zum Sperren und zum Druckanpassen, insbesondere vorgesehen für den Einsatz bei einer fahrbaren Arbeitsmaschine mit mindestens einer hydraulischen Aktuatoreinrichtung und einer Speichereinrichtung, bekannt, die mittels einer ersten Ventileinrichtung in Form eines Logikventils fluidführend miteinander verbindbar oder voneinander trennbar sind.

Dadurch, dass bei der bekannten Lösung vor dem Herstellen der fluidführenden Verbindung durch die erste Ventileinrichtung ein kontrollierter Druckausgleich zwischen der Aktuatoreinrichtung und der Speichereinrichtung über eine Ausgleichseinrichtung in Form eines Sperr- oder Schaltventils zur Vermeidung eines schlagartigen Druckausgleichs veranlasst ist, wird ein etwaiger Druckunterschied zwischen der Aktuatoreinrichtung und der Speichereinrichtung zunächst über eine weitere, vorzugsweise gedrosselte Fluidverbindung so weit abgebaut, bis die erste Ventileinrichtung in Form des Logikventils auf einem Druckniveau geöffnet werden kann, bei dem bereits Aktuator- und Speichereinrichtung auf demselben Druckniveau liegen, so dass ruckartige unkontrollierte Bewegungen auf die Fahrachse der jeweiligen Arbeitsmaschine wirksam verhindert sind und das gewünschte Feder-Dämpfungsverhalten sich unmittelbar ruckfrei einstellt.

Des Weiteren ist durch die DE 10 2014 219 634 A1 ein Druckreduzierventil mit gesonderten Radialbohrungen für unterschiedliche Fluidströmungspfade bekannt. Die bekannte Lösung betrifft insoweit ein hydraulisches Einbauventil mit einer Buchse mit einer ersten Längsbohrung, die mittels einer stirnseitigen Öffnung eine Arbeitsanschlussstelle bildet, wobei in der ersten Längsbohrung ein Kolben linear beweglich aufgenommen ist, wobei die Buchse im Bereich einer Zulaufanschlussstelle von wenigstens einer radial zur Längsachse verlaufenden ersten Radialbohrung durchsetzt wird, wobei die Buchse im Bereich einer Rücklaufanschlussstelle von wenigstens einer radial zur Längsachse verlaufenden zweiten Radialbohrung durchsetzt wird, welche in Richtung der Längsachse beabstandet zur wenigstens einen ersten Radialbohrung angeordnet ist, wobei sich ein erster Fluidströmungspfad von der Zulaufanschlussstelle zu der Arbeitsanschlussstelle erstreckt, und wobei sich ein zweiter Fluidströmungspfad von der Arbeitsanschlussstelle zur Rücklaufanschlussstelle erstreckt.

Bei der bekannten Lösung weist der Kolben wenigstens eine dritte Radialbohrung auf, welche radial zur Längsachse verläuft, wobei sie Bestandteil des ersten Fluidströmungspfades ist, wobei der Kolben wenigstens eine vierte Radialbohrung aufweist, welche radial zur Längsachse verläuft, wobei sie Bestandteil des zweiten Fluidströmungspfades ist, und wobei sie in Richtung der Längsachse beabstandet zur wenigstens einen dritten Radialbohrung angeordnet ist. Damit stehen bei der bekannten Lösung für den ersten und den zweiten Fluidströmungspfad unterschiedliche Radialbohrungen im Kolben zur Verfügung, die jeweils spezifisch an die zugeordneten Strömungsverhältnisse angepasst werden können. Das bekannte Einbauventil ist demgemäß dazu eingerichtet, den Druck an der Arbeitsanschlussstelle durch Verstellung des Kolbens auf einen vorgegebenen Wert einzuregeln.

Die bekannte Lösung ist als 3-Wege-Druckreduzierventil in Cartridge-Bauweise realisiert.

Die DE 11 2013 006 960 T5 offenbart eine Ventilvorrichtung mit einer Druckreduzierfunktion, bestehend aus mindestens einem Logikventil, einem Sperrventil und einem Druckreduzierventil, wobei der Eingang des Logikventils an eine Druckversorgungsquelle anschließbar ist.

Die EP 0 602 036 B1 und die DE 36 04 410 A1 offenbaren Ventilvorrichtungen.

Ausgehend von diesem Stand der Technik liegt der Erfindung die Aufgabe zugrunde, eine Ventilkombination zur sekundärseitigen Druckbegrenzung zu schaffen, also mit einer Druckreduzierfunktion, wie man es von einem 2-Wege-Druckreduzierventil her kennt, die sich einfach und kostengünstig realisieren lässt.

Eine dahingehende Aufgabe löst eine Ventilvorrichtung mit einer Druckreduzierfunktion gemäß der Merkmalsausgestaltung des Patentanspruchs 1.

Gemäß dem Kennzeichen des Anspruchs 1 zeichnet sich die erfindungsgemäße Ventilvorrichtung dadurch aus, dass der Ausgang des Logikventils und der Ausgang des Druckreduzierventils gemeinsam an einen Nutz- oder Verbraucheranschluss der Ventilvorrichtung angeschlossen sind, und dass das Sperrventil mit seinem Eingang an den Eingang des Logikventils sowie an eine Steuerseite desselben und mit seinem Ausgang an einen Eingang des Druckreduzierventils angeschlossen ist.

Die Ventilvorrichtung stellt eine bauliche Einheit aus mindestens drei voneinander verschiedenen Ventilen dar. Das Primärventil in Form einer Logikeinheit, insbesondere in Form eines Logikventils, sperrt die beiden fluidführenden Hauptanschlüsse der Vorrichtung sitzdicht gegeneinander ab, die im geöffneten Zustand des Ventils die Volumenzufuhr für einen hydraulischen Verbraucher sicherstellt oder umgekehrt zum Füllen eines angeschlossenen Speichers dient. Das Sperrventil ist bevorzugt als 2-Wege-Sitzventil ausgebildet und gibt bei entsprechender Betätigung den Strömungsquerschnitt und damit die Funktion am Nutzanschluss für den angeschlossenen Verbraucher frei. Das Sekundärventil ist in seiner Funktion ein 2-Wege-Druckreduzierventil und fungiert zusammen mit dem Sperrventil als Vorsteuereinheit für das Primärventil in Form des Logikventils. Bei einer bevorzugten Ausführungsform können noch zwei Düsen innerhalb der Ventilvorrichtung zum Einsatz kommen, die bei fließendem Volumen einen Druckabfall erzeugen können oder eine bewegungsdämpfende Wirkung haben. Die Anzahl der Düsen kann im Bedarfsfall auch auf eine Düse reduziert werden.

Bei einer bevorzugten Ausführungsform der erfindungsgemäßen Ventilvorrichtung ist vorgesehen, dass zumindest das Sperrventil mit dem Druckreduzierventil und den beiden genannten Düsen die Vorsteuerstufe für eine austauschbar gestaltete Hauptsteuerstufe mit dem Logikventil bildet. Dadurch besteht in vorteilhafter Weise die Möglichkeit, die Hauptsteuerstufe bei unveränderter Vorsteuerstufe entsprechend der Leistungsanforderung an die Gesamteinheit in weitem Umfang zu variieren. Somit bleibt also die Vorsteuerstufe über alle Leistungsstufen unverändert und es wird lediglich die Hauptsteuerstufe in Form der Logikeinheit respektive des Logikventils an die Leistungsanforderungen angepasst (Variation der Nenngröße).

Ist das Druckreduzierventil der Vorsteuerstufe als Proportionalventil ausgeführt und ist maximal bestromt bzw. auf den maximalen Druck eingestellt im Betrieb, so kann die Ventilvorrichtung als Einheit durch Betätigen des Sperrventils der Vorsteuerstufe insgesamt als Sperrventil betrieben werden. In dieser Variante kann die Einheit mit dem hydraulischen Ersatzschaltbild eines 2-Wege-Sitzventils in Z-Ausführung gleichgesetzt werden. In dem dahingehenden Betriebszustand wird das Logikventil mit maximalem Kolbenhub betrieben, wodurch die Feinsteuergeometrie nicht wirksam wird.

Dadurch kann der maximale Strömungsquerschnitt genutzt und das Druckgefälle auf ein Minimum gesenkt werden.

Wird die Einheit der Ventilvorrichtung, wie vorstehend bereits beschrieben, mit maximal bestromtem Proportional-Druckreduzierventil ausgeführt und um entsprechend vorteilhaft platzierte Rückschlagventile in der Vorsteuerstufe erweitert, und wird das Logikventil mit einer ausgeprägten Steuerfläche am Ventilanschluss für den Nutzanschluss ausgeführt, so ergibt sich als hydraulisches Ersatzschaltbild ein 2-Wege-Sitzventil in W-Ausführung. Auch hier wird bei nicht wirksamer Feinsteuergeometrie das Logikventil mit maximalem Kolbenhub betrieben, wodurch der maximale Strömungsquerschnitt genutzt werden kann und das Druckgefälle wird auf ein Minimum gesenkt.

Als besonders vorteilhaft hat es sich erwiesen, die Ventilvorrichtung bei einem Hydromotor einzusetzen gemäß der Merkmalsausgestaltung des Patentanspruchs 10. Zum Betrieb des genannten Hydromotors mit konstantem Druck, gespeist aus einer druckvariablen Quelle, beispielsweise in Form eines Hydrospeichers, kann dann die beschriebene Ventilvorrichtung erfindungsgemäß eingesetzt werden.

Weitere vorteilhafte Ausgestaltungen der erfindungsgemäßen Ventilvorrichtung sind Gegenstand der sonstigen Unteransprüche.

Im Folgenden wird die erfindungsmäße Ventilvorrichtung anhand verschiedener Ausführungsbeispiele nach der Zeichnung näher erläutert. Dabei zeigen in prinzipieller Darstellung in der Art von hydraulischen Schaltplänen die
- Fig. 1: die wesentlichen Komponenten der erfindungsgemäßen Ventilvorrichtung mit angeschlossenem Hydromotor als Verbraucher und einem hydraulischen Energiespeicher;
- Fig. 2: die Ausgestaltung der Ventilvorrichtung nach der Fig. 1 als 2-Wege-Sitzventil in Z-Ausführung;
- Fig. 3: eine Ventilvorrichtung nach der Fig. 1 mit modifizierter Vorsteuereinheit mit Rückschlagventilen und mit einem als Proportionaleinheit ausgeführten Druckreduzierventil;
- Fig. 4: ein der Fig. 2 entsprechendes Ersatzschaltbild für die Ausgestaltung nach der Fig. 3 als 2-Wege-Sitzventil in W-Ausführung; und
- Fig. 5 und 6: in "aufgelöster" Schaltplandarstellung praktische Realisierungsmöglichkeiten für eine Hydromotorversorgung, wobei die Fig. 6 inhaltlich weitgehend der Darstellung nach der Fig. 1 entspricht.

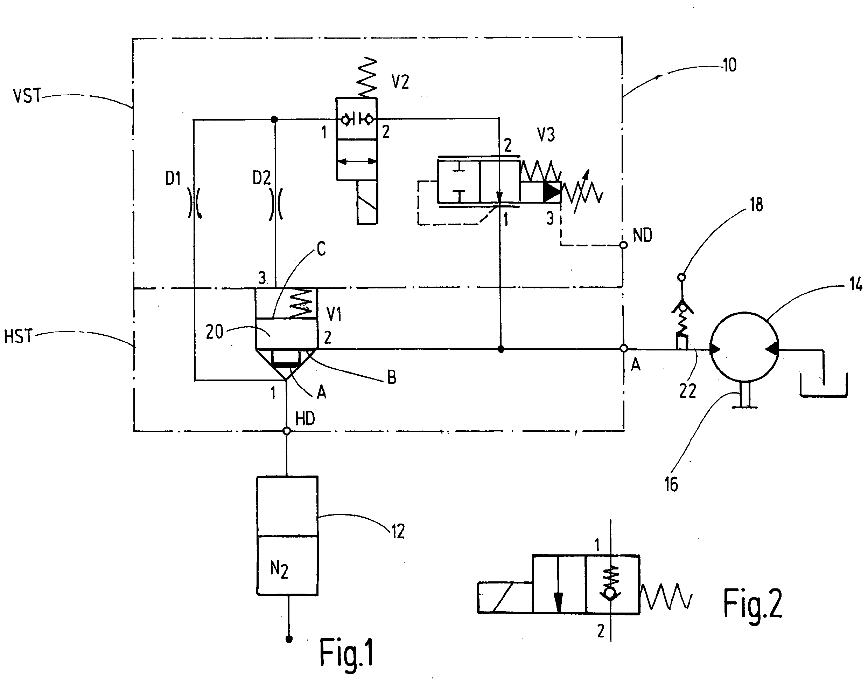

Bei der in Fig. 1 gezeigten Einheit 10 handelt es sich um eine Ventilkombination für eine sekundärseitige Druckbegrenzung, vergleichbar der Druckreduzierfunktion bei einem 2-Wege-Druckreduzierventil. Die Einheit 10 besteht im Wesentlichen aus drei voneinander verschiedenen Ventilen. Das Primärventil in Form eines Logikventils V1 sperrt die beiden Hauptanschlüsse HD, A sitzdicht gegeneinander ab. Das Sekundärventil V3, in seiner Funktion als 2-Wege-Druckreduzierventil ausgebildet, fungiert als Vorsteuereinheit für das Logikventil V1. Das 2-Wege-Sitzventil ist als Sperrventil V2 ausgebildet und gibt bei Betätigung den Strömungsquerschnitt und damit die Funktion für den Anschluss V2.1 frei. Hinzu kommen noch zwei Düsen D1, D2, die bei fließendem Volumen einen Druckabfall erzeugen (D1) oder eine bewegungsdämpfende Wirkung haben (D2). Von den beiden Düsen D1 und D2 ist die Düse D1 für eine sinnfällige Funktion erforderlich.

Bei diesem Schaltschema wird an den Anschluss HD ein hydraulischer Energiespeicher in Form eines Hydrospeichers 12 angeschlossen oder eine sonstige Druckvolumenquelle in Form einer Konstantdruckquelle oder einer druckvariablen Quelle. An den Anschluss A wird ein Verbraucher angeschlossen, im vorliegenden Fall in Form eines Hydromotors 14, der bevorzugt Teil eines Fahrantriebs 16 ist. Dahingehende Hydromotor-Fahrantriebe sind üblich, so dass an dieser Stelle hierauf nicht mehr näher eingegangen wird. Der Hydromotor 14 wird auf seiner Eingangsseite von einer Druckversorgungsquelle 18 mit Fluid vorgebbaren Drucks, beispielsweise mit einem Eingangsdruck von 30 bar, versorgt. Auf der Ausgangsseite ist der Hydromotor 14 an einen Tank T angeschlossen. Durch den dargestellten Aufbau soll mittels der Einheit 10 der Druck am Versorgungsanschluss A auf einen eingestellten Wert geregelt werden. Der Anschluss ND der Einheit 10 dient der Abführung des Vorsteueröls vonseiten des Druckreduzierventils V3. Die Schaltung ist für jede Art von Verdrängereinheiten verwendbar, also neben Hydromotoren 14 auch für nicht näher dargestellte Hydropumpen.

Zur bestimmungsgemäßen Funktionalität der Einheit muss ein Mindestdruckgefälle zwischen den Anschlüssen HD und A herrschen (p₁ > p₂). Dieses Mindestdruckgefälle ist systemeigenen Faktoren, wie innerer Reibung, Strömungsverlusten und Federkräften geschuldet und somit in erster Linie von den Ventilen V1, V2, V3 und den Düsen D1, D2 selbst abhängig. Für die folgende Betrachtung wird angenommen, dass am Anschluss HD eine hydraulische Kapazität, hier in Form des Hydrospeichers 12, angebracht sei. Wichtig bei der angeschlossenen Druckversorgungsquelle ist lediglich eine möglichst geringe Dynamik des Anschlussdrucks am Anschluss HD, wobei dieser Druck nicht zwangsläufig auch konstant bleiben muss.

Der Anschluss A ist mit dem hydraulischen Verbraucher verbunden, hier in Form des Hydromotors 14. Es sind hier aber auch andere mögliche hydraulische Verbraucher an die Einheit 10 anschließbar, wie beispielsweise Hydraulikpumpen. Insoweit stellt der Anschluss A die Arbeitsleitung dar, deren hydraulischer Druck sich durch zufließendes und abfließendes Volumen am Verbraucher 14 ergibt. Der Volumenabfluss oder die Volumenentnahme erfolgt dabei durch den wie auch immer gearteten hydraulischen Verbraucher, hier in Form des Hydromotors 14. Die Volumenzufuhr erfolgt primär über den durch das Logikventil V1 freigegebenen Strömungsquerschnitt und das darüber herrschende Druckgefälle. Der Anschluss ND ist lediglich zur Abführung des Vorsteueröls des Ventils V3 notwendig. Obgleich dieser Anschluss nur das Vorsteueröl abführt und keine funktionsrelevante Aufgabe für die Ventileinheit 10 erfüllt, sollte der hydraulische Druck an dieser Stelle jedoch keine größeren Schwankungen erfahren, da sich dieser Druck auf den Druckeinstellwert der ventilinternen Vorsteuerung für das Druckreduzierventil V3 auswirkt und somit auch direkten Einfluss auf die Funktionsstabilität der gesamten Einheit 10 hat.

Das Logikventil V1 in der hier ausgeführten Variante ist ein klassisches 2-Wege-Einbauventil und entspricht einer sogenannten Logikeinheit mit einer Feinsteuergeometrie mit drei Wirkflächen. Auf die primäre Wirkfläche A wirkt der Druck des Ventilanschlusses V1.1 ein. Die sekundäre Wirkfläche B erfährt den Druck von Ventilanschluss V1.2 und misst von der Größe her bestenfalls weniger als 1/100 der Primärfläche A. Die tertiäre Wirkfläche C, die vom Fluiddruck am Ventilanschluss V1.3 beaufschlagt wird, bildet demgemäß die größte Wirkfläche aus und entspricht der Summe der Wirkflächen A und B. Wie dargestellt, wird der Ventilkolben 20 des Ventils V1 federvorgespannt in den Sitz gedrückt und ist mit einem Feinsteuerzapfen ausgeführt. Dieser sorgt als Zylinder mit definierten Nutz- oder Feinsteuergeometrien dafür, dass der freigegebene Strömungsquerschnitt mit einsetzendem Kolbenhub möglichst gering ausfällt und so eine möglichst hohe Auflösung ermöglicht ist. Anstelle der gezeigten zylindrischen Ausführung lässt sich der Feinsteuerzapfen auch konisch oder gegebenenfalls sogar in Kugelform ausbilden.

Bei dem Sperrventil V2 handelt es sich um ein 2-Wege-Sitzventil in normal geschlossener Ausführung mit Magnetbetätigung.

Bei dem Druckreduzierventil V3 handelt es sich um ein vorgesteuertes 2-Wege-Druckreduzier- oder auch Druckschließventil. Das Ventil ist in der in Fig. 1 gezeigten Grundstellung geöffnet und gibt den maximalen Strömungsquerschnitt von Ventilanschluss V3.2 nach Ventilanschluss V3.1 frei. Bei Überschreitung des Drucks an Anschluss V3.1 reagiert die Vorsteuerung und verringert den Strömungsquerschnitt.

Die beiden in der Fig. 1 gezeigten Düsen D1 und D2 können auf unterschiedliche Weise ausgeführt sein, beispielsweise als Blende, Drossel, Venturi-Düse oder ähnlichen Einrichtungen.

Im Folgenden wird der Regelvorgang mit Druckreduzierfunktion näher beschrieben. Dabei ist die verwendungsgemäße Ausgangssituation für den Regelvorgang der Einheit 10 das bereits erwähnte Mindestdruckgefälle zwischen Anschluss HD und Anschluss A. Bei unbetätigtem Sperrventil V2 fließt kein Volumen über die Düse D1, wodurch der Druck, der an dem Anschluss V1.1 des Logikventils V1 anliegt, auch über die Drossel D2 an dem Ventilanschluss V1.3 von Ventil V1 und am Ventilanschluss V2.1 des Sperrventils V2 ansteht. Dadurch wird der Ventilkolben 20 des Logikventils V1, bedingt durch die Federkraft der gezeigten Druckfeder, im Sitz gehalten und gibt keinen Strömungsquerschnitt frei. Die Ventilanschlüsse V1.2, V2.2 des Logikventils V1 und des Sperrventils V2 wie auch die Ventilanschlüsse V3.1 und V3.2 des Druckreduzierventils V3 erfahren ohne Volumenbewegungen den Druck am Anschluss V1.2 des Logikventils V1.

Der eigentliche Regelvorgang geht nun wie folgt vonstatten. Durch elektromagnetisches Betätigen des Sperrventils V2 fließt Druckmedium über den freigegebenen Querschnitt über die Ventilanschlüsse V2.1, V3.1 von Sperrventil V2 und Druckreduzierventil V3 hin zu Anschluss V1.2 des Logikventils V1. Durch den sich daraufhin einstellenden Volumenstrom über die Düse D1 stellt sich ein Druckabfall mittels dieser Düse D1 ein, wodurch der Druck auf die Steuerfläche C von Logikventil V1 geringer wird als der Druck auf die Steuerfläche A des Ventilkolbens 20. Erreicht das Druckgefälle einen bestimmten vorgebbaren Wert, bewegt die resultierende Kolbenkraft den Kolben 20 gegen die Kraft der Druckfeder und gibt somit einen Strömungsquerschnitt über das Logikventil V1 frei.

Nun beginnt das Druckmedium entsprechend dem Druckgefälle über das Logikventil V1 von dem Ventilanschluss V1.1 zu dem Ventilanschluss V1.2 des Ventils V1 und damit auch gleichzeitig nach Anschluss A zu fließen. Hier steigt nun durch das zusätzliche Volumen der Druck am Verbraucher, hier in Form des Hydromotors 14. Ebenso steigt aber auch der Druck an Ventilanschluss V3.1 des Druckreduzierventils V3 an. Erreicht dieser Druck den eingestellten Druck am Druckreduzierventil V3, so beginnt die Ventilvorsteuerung zu regeln und reduziert den Strömungsquerschnitt im Druckreduzierventil V3.

Der abnehmende Strömungsquerschnitt drosselt nun seinerseits den Volumenstrom über das Druckreduzierventil V3 an. Dadurch verringert sich aber auch der Volumenstrom über die Düse D1. Das führt dazu, dass sich der Druckabfall über die Düse D1 verringert und somit auch das Druckgefälle über das Logikventil V1. Als Resultat hiervon verringert sich die öffnende Kolbenkraft und der Kolben 20 des Logikventils V1 verringert wieder seinen Strömungsquerschnitt. Dadurch verringert sich wiederum der Volumenstrom über das Logikventil V1, wodurch sich der Druck am Nutzanschluss A allmählich wieder verringert. Fällt dieser Druck unter den im Druckreduzierventil V3 eingestellten Wert, wobei Hysteresevorgänge vernachlässigt werden, gibt dieses wiederum den Strömungsquerschnitt frei, woraufhin das Druckgefälle über die Düse D1 und somit das Logikventil V1 wieder zunehmen und das Ventil V1 wieder etwas mehr öffnet. Somit schließt sich die Regelschleife.

Der vorstehend angesprochene Regelvorgang strebt ein Gleichgewicht zwischen dem am Nutzanschluss A zur Verfügung gestellten Volumenstrom und dem vom Verbraucher (Hydromotor 14) abgenommenen Volumenstrom an. Dieses Gleichgewicht kann aber nur erreicht werden, wenn sich der im Logikventil V1 freigegebene Strömungsquerschnitt immer an das veränderliche Druckgefälle über dieses Ventil V1 einstellt. Auf diese Weise kann am Nutzanschluss A, unabhängig vom Versorgungsdruck am Anschluss V1.1, der über das Druckreduzierventil V3 eingestellte Druck bereitgestellt oder geregelt werden.

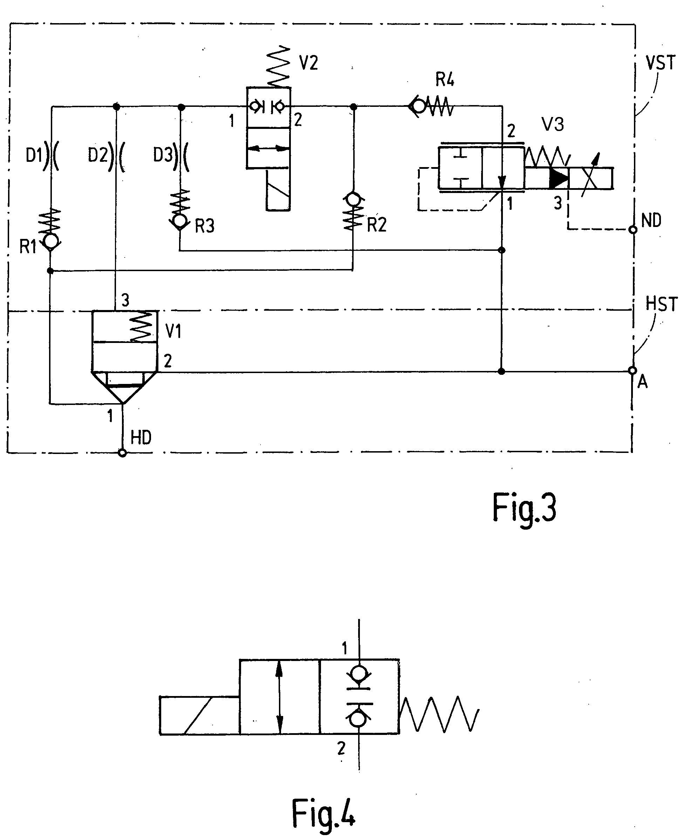

Analog zu dem bereits beschriebenen Aufbau der Einheit 10, bei dem das Druckreduzierventil V3 gemäß der Darstellung nach der Fig. 1 als manuell zu verstellendes Ventil ausgeführt ist, kann dieses Ventil auch als Proportionaleinheit ausgeführt sein, wie sich dies aus der Darstellung nach der Fig. 3 ergibt. Damit ist es möglich, im Betrieb über eine Steuerung beispielsweise Einfluss auf den Einstelldruck zu nehmen. Sowohl die Proportionaleinheit als auch die manuell vorgesehene Einstellmöglichkeit für das Ventil V3 stellen eine weitere Vorsteuerung für das Druckreduzierventil V3 dar, die auf die eine Steuerseite des dahingehenden Ventilschiebers einwirkt, wohingegen der ausgangsseitige Druck am Ausgang V3.1 des Ventils V3 als die eine, andere Vorsteuerung auf die gegenüberliegende Steuerseite des dahingehenden Ventilschiebers des Druckreduzierventils V3 permanent einwirkt. Wie die Fig. 1 weiter zeigt, lässt sich die Einheit 10 in zwei Bereiche unterteilen, und zwar in eine Vorsteuerstufe VST und eine Hauptsteuerstufe HST. Die Vorsteuerstufe VST umfasst dabei die Düsen D1 und D2 sowie das Sperrventil V2 und das Druckreduzierventil V3, wohingegen die Hauptsteuerstufe HST im Wesentlichen das Logikventil V1 aufweist. Bei der dahingehend zweigeteilten Einheit 10 besteht die Möglichkeit, die Hauptsteuerstufe HST bei unveränderter Vorsteuerstufe VST entsprechend den Leistungsanforderungen an die Gesamteinheit 10 zu variieren.

Die bereits angesprochene Feinsteuergeometrie, bezogen auf das Logikventil V1 in Form eines konischen Zapfens oder eines hier speziell ausgeführten Zylinderfortsatzes mit Nutgeometrien, kann als Hilfsmittel zur Feinabstimmung der Hauptsteuerstufe HST auf die Eigenschaften der Druckquelle, hier in Form des Hydrospeichers 12 und des Verbrauchers, hier in Form des Hydromotors 14, genutzt werden. Dadurch wird Einfluss auf die Strömungsquerschnitt-Kolbenhub-Kennlinie derart genommen, dass eine hohe Auflösung für den Regelvorgang ermöglicht ist und dennoch eine hohe obere Leistungsgrenze erreicht werden kann. Dadurch, dass die Einheit 10 im unbestromten Zustand keinen Durchgang zwischen den Anschlüssen V1.1 und V1.2 des Logikventils V1 hat, ist die dahingehende Anordnung "normally-closed" und sitzdicht ausgebildet. Dergestalt benötigt die Einheit 10 kein vor- oder nachgestelltes weiteres Sperrventil, welches seinerseits wiederum auf die zuführende Volumenleistung erst noch angepasst werden müsste und zusätzliche Druckverluste verursachen würde.

Ist das Druckreduzierventil V3 der Vorsteuerstufe VST als Proportionalventil ausgeführt gemäß der Darstellung nach der Fig. 3 und wird im Betrieb maximal bestromt, so kann die Einheit 10 durch Betätigung von Sperrventil V2 der Vorsteuerstufe VST als Ganzes als Sperrventil betrieben werden. In dieser Variante kann die Einheit 10 gemäß der Darstellung nach der Fig. 1, jedoch mit einer Proportionaleinheit gemäß der Darstellung nach der Fig. 3 versehen, mit dem Ersatzschaltbild eines 2-Wege-Sitzventils in Z-Aus-führung gemäß der Darstellung nach der Fig. 2 gleichgesetzt werden. In diesem Betriebszustand wird das Logikventil V1 mit maximalem Kolbenhub betrieben, wodurch die Feinsteuergeometrie nicht wirksam wird. Dadurch können der maximale Strömungsquerschnitt genutzt und das Druckgefälle auf ein Minimum gesenkt werden.

Wird die Einheit 10, wie vorstehend bereits beschrieben, mit einem maximal bestromten Proportional-Druckreduzierventil V3 ausgeführt und um hier vorteilhaft eingesetzte Rückschlagventile R1, R2, R3 und R4 gemäß der Darstellung nach der Fig. 3 in der Vorsteuerstufe VST erweitert und wird die Logikeinheit V1 als Einheit mit einer ausgeprägten Steuerfläche B an ihrem Ventilanschluss 2 ausgeführt, so ergibt sich insgesamt eine Lösung mit einem Ersatzschaltbild eines 2-Wege-Sitzventils in W-Ausführung gemäß der Darstellung nach der Fig. 4. Auch hier wird wieder das Ventil V1 mit maximalem Kolbenhub betrieben bei Nicht-Aktivierung der Feinsteuergeometrie, wodurch der maximale Strömungsquerschnitt genutzt und das Druckgefälle auf ein Minimum gesenkt werden kann, was energetisch besonders günstig ist.

Besonders bevorzugt wird gemäß der Darstellung nach der Fig. 1 die Einheit 10 zum Betrieb eines Hydromotors 14 mit konstantem Druck, gespeist aus einer druckvariablen Quelle, wie dem Hydrospeicher 12, eingesetzt, also beispielsweise als Radnabenmotor bei einer Trailerachse 16.

Mit Hilfe der multifunktionalen Ventilgruppe V1, V2, V3 ist es auch möglich, die hydraulische Energie aus dem Hydrospeicher 12 dazu zu nutzen, die Saugleitung 22 einer nicht näher dargestellten Hydropumpe als hydraulischem Verbraucher auf ein höheres Druckniveau zu bringen, so dass eine saugseitige Vorspannung der Hydropumpe in einem geschlossenen Kreis, beispielsweise im Rahmen eines hydrostatischen Fahrantriebes, vorliegt (Boost-Betrieb). Dazu muss gewährleistet werden, dass der konstante Volumenstrom, den die Pumpe saugseitig fordert, komplett aus dem Speicher 12 über die beschriebene Einheit 10 geleitet werden kann. Außerdem muss die Einheit 10 bei einem großen Druckgefälle zwischen Speicher 12 und saugseitigem Versorgungsdruck eine entsprechend hohe Feinsteuerbarkeit besitzen, um gravierende Volumen- und infolgedessen dann auch Druckschwankungen vor der Pumpe zu vermeiden. Ziel ist die Einstellbarkeit eines, dem gewöhnlichen Vorspanndruck der Pumpe überlegenen Versorgungsdrucks, um das Druckgefälle über die Pumpe bei erhöhter Last zu minimieren.

Zusätzlich zu der zuvor beschriebenen Druckreduzierfunktion im "Boost"-Betrieb des Fahrantriebs, ist es mit der Einheit 10 gemäß der Darstellung nach der Fig. 3 auch möglich, durch Umkehr des Volumenstroms die Speichereinheit 12 erneut zu laden. Dazu ist nicht zuletzt aufgrund der Energieeffizienz ein möglichst geringes Druckgefälle über die Einheit 10 wünschenswert.

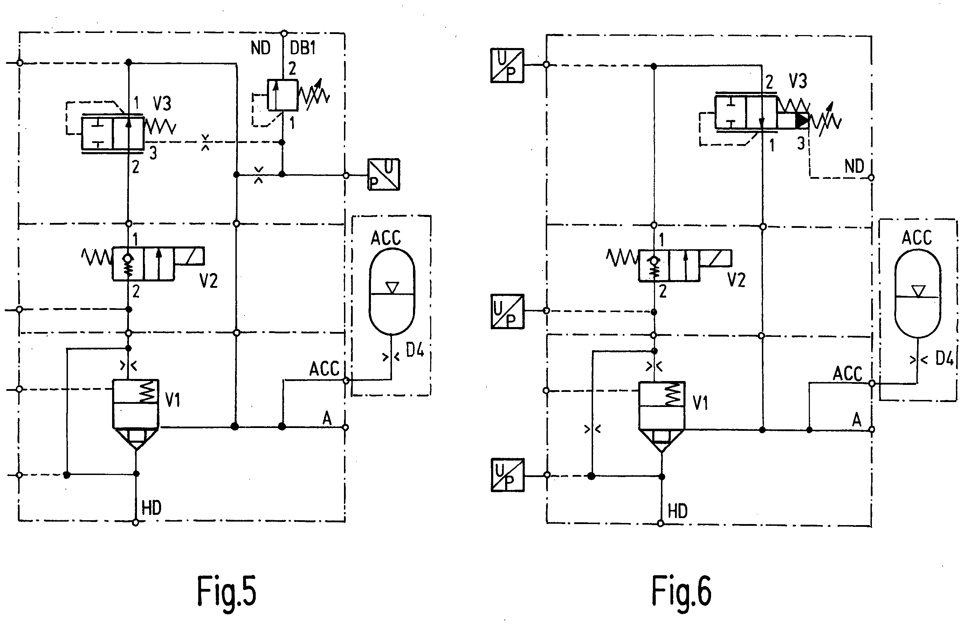

Die in den Fig. 5 und 6 noch abschließend dargestellten Schaltpläne verkörpern dem Grund nach die gleiche Versorgungslogik. Der Schaltplan nach der Fig. 6 entspricht dabei im Wesentlichen der in Fig. 1 dargestellten zweigeteilten Einheit 10 mit Vorsteuerstufe VST und Hauptsteuerstufe HST. Bei dem Schaltplan nach der Fig. 5 ist das Druckreduzierventil V3 nach der Fig. 6 aufgelöst worden in Ventil mit einer Druckwaagen-Funktion, verkörpert durch das dortige Ventil V3, und eine Druckbegrenzungs-Funktion, verkörpert durch das Ventil DB1.

Ferner ist es für die Anwendung bei dahingehenden Fahrantrieben von Vorteil, einen weiteren ausgelagerten Hydrospeicher ACC vorzusehen, dem eine Düse D4 vorgeschaltet ist, von der aus er gleich mit der Arbeitsleitung zum Nutzanschluss A in Verbindung steht. Diese Anordnung hat sich als besonders vorteilhaft erwiesen für die bereits angesprochene sogenannte "Boost"-Funktion. Es hat sich hierbei gezeigt, dass der Hydrospeicher ACC bei der Druckregelung als Puffer von großem Vorteil ist. In seiner Funktion gleicht er Unzulänglichkeiten in der Feinsteuerung aus, kompensiert zu große Volumensprünge in der genannten Arbeitsleitung und stabilisiert auf diese Weise den geführten Druck. Dadurch wird es der Regelung über die Einheit 10 überhaupt erst ermöglicht, energieeffizient zu arbeiten. Die angesprochene vorgelagerte Düse D4 drosselt insoweit den Volumendurchsatz an.

Das erfindungsgemäße Druckreduzierventil unterscheidet sich gegenüber den bekannten Lösungen darin, dass eine 2-Wege-Lösung realisiert ist, also mithin keine Druckentlastung nach einem dritten, weiteren Anschluss benötigt wird. Die erfindungsgemäße Lösung ist sitzdicht ausgeführt und somit nicht schieberdicht, wie die bekannten Lösungen. Des Weiteren ist keine Cartridge-Lösung realisiert, sondern vielmehr eine Ventillösung, die sich in eine Vor- und Hauptstufe separieren lässt. Dies hat so keine Entsprechung im Stand der Technik.

## Patentansprüche

1. Ventilvorrichtung mit einer Druckreduzierfunktion, bestehend aus mindestens
- einem Logikventil (V1),
- einem Sperrventil (V2), und
- einem Druckreduzierventil (V3),
wobei der Eingang (1) des Logikventils (V1) an eine Druckversorgungsquelle (HD) anschließbar ist, **dadurch gekennzeichnet, dass** der Ausgang (V1.2) des Logikventils (V1) und der Ausgang (V3.1) des Druckreduzierventils (V3) gemeinsam an einen Nutz- oder Verbraucheranschluss (A) der Ventilvorrichtung angeschlossen sind, und dass das Sperrventil (V2) mit seinem Eingang (V2.1) an den Eingang (V1.1) des Logikventils (V1) sowie an eine Steuerseite (V1.3) desselben und mit seinem Ausgang (V2.2) an einen Eingang (V3.2) des Druckreduzierventils (V3) angeschlossen ist.

2. Ventilvorrichtung nach Anspruch 1, **dadurch gekennzeichnet, dass** auf eine der Steuerseiten des Druckreduzierventils (V3) der ausgangsseitige Druck am Ausgang (V3.1) des Ventils (V3) als die eine Vorsteuerung und auf einer gegenüberliegenden Steuerseite dieses Ventils (V3) eine weitere Vorsteuerung wirkt.

3. Ventilvorrichtung nach Anspruch 2, **dadurch gekennzeichnet, dass** die weitere Vorsteuerung des Druckreduzierventils (V3) für die Abführung des Vorsteueröls an einen Abführanschluss (ND) angeschlossen ist.

4. Ventilvorrichtung nach einem der vorstehenden Ansprüche, **dadurch gekennzeichnet, dass** in die jeweilige Verbindungsleitung zwischen der Eingangsseite (V1.1) sowie der Steuerseite (V1.3) des Logikventils (V1) und der gemeinsamen Eingangsseite (V2.1) des Sperrventils (V2) eine Düse (D1, D2) geschaltet ist.

5. Ventilvorrichtung nach Anspruch 4, **dadurch gekennzeichnet, dass** zumindest das Sperrventil (V2) mit dem Druckreduzierventil (V3) und den beiden Düsen (D1, D2) eine Vorsteuerstufe (VST) für eine austauschbar gestaltete Hauptsteuerstufe (HST) mit dem Logikventil (V1) bildet.

6. Ventilvorrichtung nach einem der vorstehenden Ansprüche, **dadurch gekennzeichnet, dass** zwischen der Eingangsseite (V2.1) des Sperrventils (V2) und der Ausgangsseite (V3.1) des Druckreduzierventils (V3) eine weitere Verbindungsleitung mit einer Düse (D3) geschaltet ist und dass auf der Ausgangsseite der Düse (D3) ein in Richtung der Düse (D3) öffnendes Rückschlagventil (R3) vorhanden ist.

7. Ventilvorrichtung nach einem der Ansprüche 4 oder 5, **dadurch gekennzeichnet, dass** die Düse (D1) ausgangsseitig über eine Verbindungsleitung mit einem Rückschlagventil (R1), das in Richtung der Düse (D1) öffnet, und einem weiteren Rückschlagventil (R2), das in Richtung des ersten Rückschlagventils (R1) öffnet, an die Ausgangsseite (V2.2) des Sperrventils (V2) angeschlossen ist.

8. Ventilvorrichtung nach einem der vorstehenden Ansprüche, **dadurch gekennzeichnet, dass** die Ventilvorrichtung als ein 2-Wege-Sitzventil in W- oder Z-Ausführung konzipiert ist.

9. Hydromotor mit einer Ventilvorrichtung nach einem der vorstehenden Ansprüche, **dadurch gekennzeichnet, dass** er mit seiner Fluidseite an den Nutzanschluss (A) angeschlossen ist und dass zum Beschleunigen des dahingehenden Hydromotors eine Hydrospeichereinheit (ACC) dient, die über eine korrespondierende Anschlussstelle (ACC) der Ventilvorrichtung auf die Ausgangsseite (V1.2) von Logikventil (V1) und die Ausgangsseite (V3.1) von Druckreduzierventil (V3) geschaltet ist.

## Claims

1. Valve device with a pressure-reducing function, consisting of at least
- one logic valve (V1),
- one stop valve (V2), and
- one pressure-reducing valve (V3),
wherein the inlet (1) of the logic valve (V1) can be connected to a pressure supply source (HP), **characterised in that** the outlet (V1.2) of the logic valve (V1) and the outlet (V3.1) of the pressure-reducing valve (V3) are jointly connected to a service or user connection (A) of the valve device and **in that** the stop valve (V2) with its inlet (V2.1) is connected to the inlet (VI.1) of the logic valve (V1) and to a control side (V1.3) of said valve and with its outlet (V2.2) to an inlet (V3.2) of the pressure-reducing valve (V3).

2. Valve device according to claim 1, **characterised in that**, on one of the control sides of the pressure-reducing valve (V3), the pressure on the outlet side acts as one pilot control at the outlet (V3.1) of the valve (V3) and another pilot control on an opposite control side of this valve (V3).

3. Valve device according to claim 2, **characterised in that** the other pilot control of the pressure-reducing valve (V3) for discharging the pilot control oil is connected to a discharge connection (LP).

4. Valve device according to any one of the preceding claims, **characterised in that** a nozzle (D1, D2) is connected in the respective connecting line between the inlet side (V1.1) and the control side (V1.3) of the logic valve (V1) and the joint inlet side (V2.1) of the stop valve (V2).

5. Valve device according to claim 4, **characterised in that** at least one stop valve (V2), with the pressure-reducing valve (V3) and the two nozzles (D1, D2), forms a pilot control stage (VST) for a main control stage (HST), which is designed to be exchangeable, with the logic valve (V1).

6. Valve device according to any one of the preceding claims, **characterised in that** another connecting line with a nozzle (D3) is connected between the inlet side (V2.1) of the stop valve (V2) and the outlet side (V3.1) of the pressure-reducing valve (V3) and **in that** a non-return valve (R3) opening in the direction of the nozzle (D3) is provided on the outlet side of the nozzle (D3).

7. Valve device according to either one of claims 4 or 5, **characterised in that** the nozzle (D1) is connected on the outlet side by means of a connecting line with a non-return valve (R1), which opens in the direction of the nozzle (D1), and with another non-return valve (R2), which opens in the direction of the first non-return valve (R1), to the outlet side (V2.2) of the stop valve (V2).

8. Valve device according to any one of the preceding claims, **characterised in that** the valve device is designed as a two-way seat valve in a W or Z design.

9. Hydraulic motor with a valve device according to any one of the preceding claims, **characterised in that** it is connected to the service connection (A) with its fluid side and **in that** a hydraulic accumulator unit (ACC) is used to accelerate the associated hydraulic motor, said hydraulic accumulator unit being connected by means of a corresponding connection point (ACC) of the valve device to the outlet side (V1.2) of the logic valve (V1) and the outlet side (V3.1) of the pressure-reducing valve (V3).

## Revendications

1. Système de vannes ayant une fonction de réduction de la pression constitué d'au moins
- une vanne (V1) logique,
- une vanne (V2) d'arrêt, et
- une vanne (V3) de réduction de la pression,
dans lequel l'entrée (1) de la vanne (V1) logique peut être raccordée à une source (HD) d'alimentation en pression, **caractérisé en ce que**,
la sortie (V1.2) de la vanne (V1) logique et la sortie (V3.1) de la vanne (V3) de réduction de la pression sont raccordées conjointement à un raccord (A) utile de consommateur du système de vannes,
et **en ce que** la vanne (V2) d'arrêt est raccordée par son entrée (V2.1) à l'entrée (V1.1) de la vanne (V1) logique ainsi qu'à un côté (V1.3) de commande de celle-ci et par sa sortie (V2.2) à une entrée (V3.2) de la vanne (V3) de réduction de la pression.

2. Système de vannes suivant la revendication 1, **caractérisé en ce que**, sur l'un des côtés de commande de la vanne (V3) de réduction de la pression, la pression, du côté de la sortie, à la sortie (V3.1) de la vanne (V3), agit en tant qu'une commande pilote et, du côté de commande opposé de cette vanne (V3), agit une autre commande pilote.

3. Système de vannes suivant la revendication 2, **caractérisé en ce que** l'autre commande pilote de la vanne (V3) de réduction de la pression est, pour l'évacuation de l'huile de commande pilote, raccordée à un raccord (ND) d'évacuation.

4. Système de vannes suivant l'une des revendications précédentes, **caractérisé en ce qu'**une buse (D1, D2) est montée dans le conduit de liaison respectif entre le côté (V1.1) d'entrée ainsi que le côté (V1.3) de commande de la vanne (V1) logique et le côté (V2.1) commun d'entrée de la vanne (V2) d'arrêt.

5. Système de vannes suivant la revendication 4, **caractérisé en ce qu'**au moins la vanne (V2) d'arrêt forme, avec la vanne (V3) de réduction de la pression et les deux buses (D1, D2), un étage (VST) de pilotage pour un étage (HST) de commande principale conformé de manière à pouvoir être remplacé et ayant la vanne (V1) logique.

6. Système de vannes suivant l'une des revendications précédentes, **caractérisé en ce qu'**un autre conduit de liaison ayant une buse (D3) est monté entre le côté (V2.1) d'entrée de la vanne (V2) d'arrêt et le côté (V3.1) de sortie de la vanne (V3) de réduction de la pression et **en ce qu'**il y a, du côté de la sortie de la buse (D3), un clapet (R3) antiretour s'ouvrant dans la direction de la buse (D3).

7. Système de vannes suivant l'une des revendications 4 ou 5, **caractérisé en ce que** la buse (D1) est raccordé au côté (V2.2) de sortie de la vanne (V2) d'arrêt du côté de la sortie par un conduit de liaison ayant un clapet (R1) antiretour, qui s'ouvre en direction de la buse (D1) et ayant un autre clapet (R2) antiretour, qui s'ouvre en direction du premier clapet (R1) antiretour.

8. Système de vannes suivant l'une des revendications précédentes, **caractérisé en ce que** le système de vannes est conçu sous la forme d'une vanne à siège à 2 voies en une réalisation en W ou en Z.

9. Moteur hydraulique ayant un système de vannes suivant l'une des revendications précédentes, **caractérisé en ce qu'**il est raccordé par son côté de fluide au raccord (A) utile et **en ce qu'**un groupe (ACC) d'accumulateur hydraulique sert à l'accélération du moteur hydraulique et est monté par des points (ACC) de raccordement correspondants du système de vannes au côté (V1.2) de sortie de la vanne (V1) logique et au côté (V3.1) de sortie de la vanne (V3) de réduction de la pression.
